# FASCICULE DE BREVET EUROPEEN

(11) **EP 0 615 041 B1**
(45) Date de publication et mention de la délivrance du brevet: **09.04.1997**
(21) Numéro de dépôt: 94400548.7
(22) Date de dépôt: 14.03.1994
(51) Int. Cl.: E05B 73/00, G02C 11/00, B65D 73/00, G08B 13/24

(54) **Dispositif antivol réutilisable pour lunettes**
Wiederverwendbare Antidiebstahlvorrichtung für Brillengestelle
Reusable anti-theft device for spectacle frames

(30) Priorité: 12.03.1993 FR 9302859
(43) Date de publication de la demande: 14.09.1994
(73) Titulaire: PLASTI-MAX SpA, 24064 Grumello del Monte (IT)
(72) Inventeur: Lamy, Patrick, F-71580 Saillenard (FR); Mazzucchelli, Arnaldo, c/o Plasti-Max S.p.A, I-24064 Grumello del Monte (IT)
(74) Mandataire: Fort, Jacques

(56) Documents cités:
- EP-A- 0 514 278
- WO-A-89/06820
- FR-A- 2 600 431
- US-A- 4 987 754

## Description

La présente invention concerne un dispositif antivol pour lunettes, autorisant le client potentiel à essayer les lunettes sur place, sans l'enlever.

On a déjà proposé des dispositifs antivol constitués par une bague qui peut être fixée sur une branche de lunette et interdit de replier la branche (FR-A-2 631 801). Ce dispositif exige que les lunettes soient placées, dans le magasin, sur un présentoir pouvant recevoir la monture de lunettes avec ses branches déployées.

On connaît également (WO-A-89/06 820) un dispositif antivol pour lunettes constitué par une plaque munie de moyens d'accrochage à un support de présentation et un lien prolongeant la plaque, formant en position de verrouillage une boucle fermée capable d'enserrer le pontet de la monture d'une paire de lunettes. Ce dispositif n'est utilisable qu'une seule fois, du fait de la nature des moyens de verrouillage du lien sur la plaque. De plus, il n'assure qu'une protection réduite contre le vol, car le lien en matière plastique peut être coupé relativement facilement, à l'aide d'un cutter par exemple.

La présente invention vise notamment à fournir un dispositif de protection réutilisable, permettant de présenter les lunettes avec les branches repliées, et difficile à enlever par une personne non-autorisée.

A cet effet, l'invention propose un dispositif tel que défini dans la revendication 1.

D'autres caractéristiques, avantageusement utilisables en liaison avec les précédentes, mais pouvant l'être indépendamment, sont définies par les sous-revendications.

L'invention sera mieux comprise à la lecture de la description qui suit, faisant référence aux dessins annexés où :
- la figure 1 représente une vue de face du dispositif selon l'invention ;
- la figure 2 représente une vue en coupe du dispositif selon un premier mode de réalisation ;
- la figure 3 représente une vue en coupe du dispositif selon un autre mode de réalisation;
- la figure 4 représente une coupe du dispositif de la figure 3 selon la ligne IV-IV ;
- la figure 5, similaire à la figure 2, montre une variante de réalisation, en coupe suivant la ligne V-V de la figure 6, la plaque et le lien étant séparés ;
- la figure 6 est une vue en élévation du dispositif de la figure 5 ;
- la figure 7, similaire à la figure 5, montre une autre variante encore de réalisation.

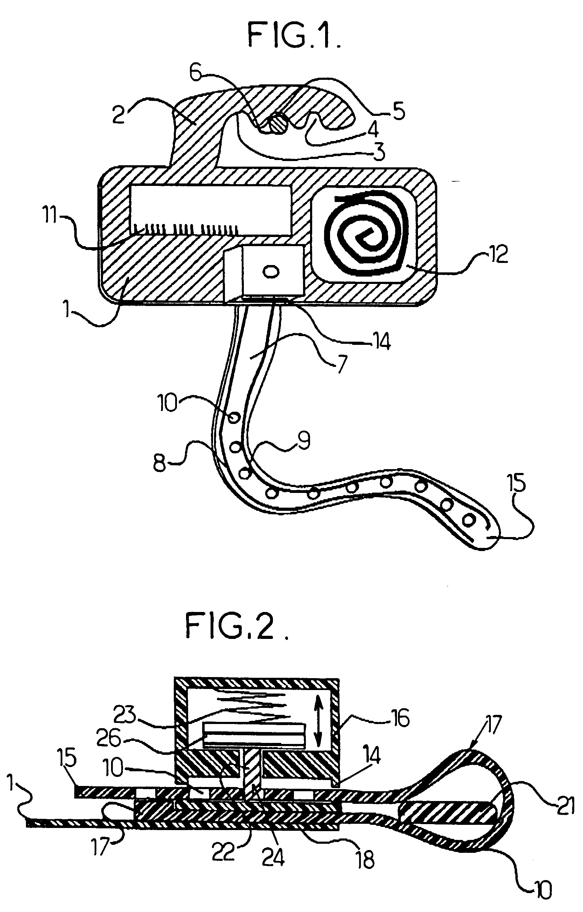

Le dispositif montré à titre d'exemple en figures 1 et 2 est constitué par une plaque 1 en matière plastique (ou en métal, là où un actionnement magnétique est requis) présentant une partie 2 en forme de crochet, ayant des cannelures 3, 4, 5. Le crochet 2 permet d'accrocher le dispositif sur une tringle 6 de présentoir. La plaque 1 peut porter une étiquette 11 portant le prix, les références et l'identification par code-barre de l'article. Elle peut contenir ou porter une étiquette 12 portant un bobinage plat formant antenne accordée pour interagir avec un système d'alarme détectant le passage de l'article en un passage protégé. Cette étiquette 12 est collée sur la plaque 1 ou incluse dans celle-ci.

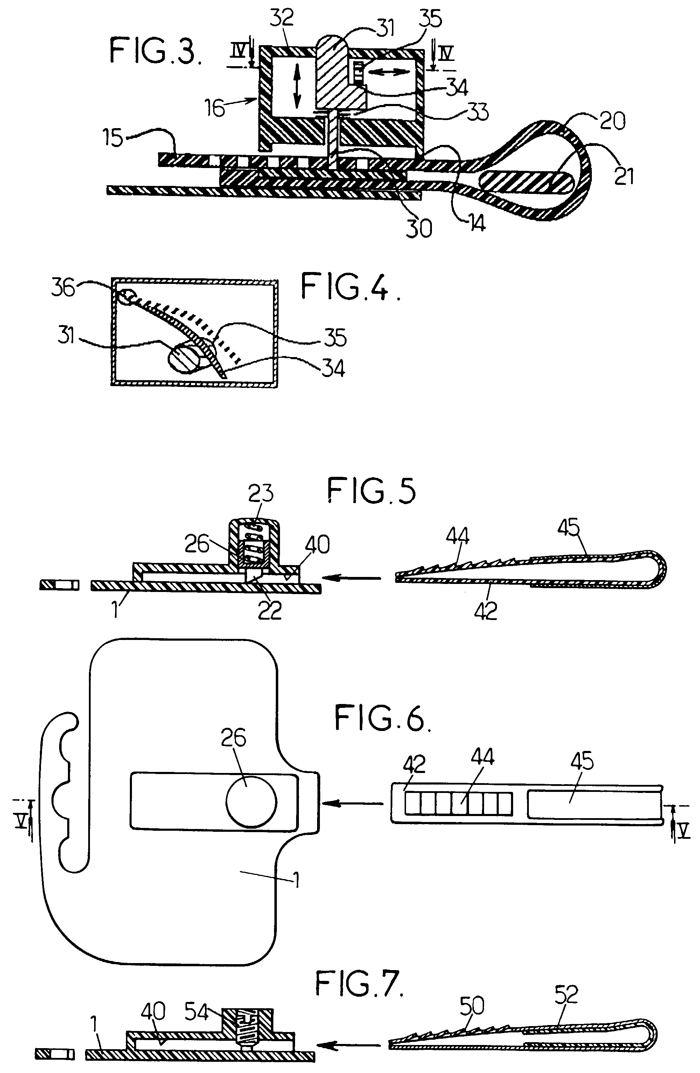

A l'opposé du crochet 2 est disposé un lien 7 en forme de lanière. Cette lanière est réalisée en une matière plastique souple mais elle est renforcée. Dans le cas de la figure 4, il est renforcé par deux câbles en acier 8, 9 destinés à interdire le cisaillement. Plusieurs trous 10 sont répartis le long du lien. Ce dernier peut être d'une seule pièce avec la plaque et fabriqué par moulage avec elle. Mais cela oblige à utiliser le même matériau constitutif pour la plaque et le lien. Souvent, le lien sera en conséquence séparé de la plaque et constitué en un matériau plus souple. Dans ce cas l'extrémité fixe du lien 7 peut comporter un renflement 17 destiné à s'appuyer sur la plaque et à retenir le lien.

Dans les deux cas la plaque comporte une fente 14 d'introduction de l'extrémité libre 15 du lien 7 et des moyens déverrouillables de retenue de cette extrémité. Ces moyens sont constitués par un bloc 16 ayant un boîtier solidaire de la plaque, généralement moulé avec elle, si la plaque est en matière plastique.

Dans le cas illustré sur les figures 1 et 2, le lien est mis en place sur la plaque 1 en l'enfilant dans une fente 18 jusqu'à ce que le renflement 17 soit en appui. La section de la fente 18 est telle que le lien puisse y glisser. Le lien, après avoir été passé autour du pontet 21 de la monture des lunettes, est introduit dans la fente 14 pour y être verrouillé.

Dans le cas illustré en figure 2, les moyens de verrouillage comportent un ergot 22 mobile perpendiculairement au lien, destiné à pénétrer dans un des trous 10 sous l'action d'un ressort 23. L'ergot peut avoir une section carrée, pour ne pas tourner dans son logement, ou cylindrique. L'extrémité de l'ergot présente un chanfrein 24 facilitant l'engagement du lien et interdisant son retrait non-autorisé.

Les moyens montrés en figure 2 sont à déverrouillage magnétique. L'ergot est solidaire d'une plaque 26 en matériau magnétique ou ferro-magnétique. Un outil de déverrouillage, placé par exemple à la caisse du magasin, comporte un alvéole destiné à recevoir le boîtier du bloc 16 et dont le fond contient un aimant de traction de la plaque 26 pour retirer l'ergot et autoriser le retrait de l'extrémité libre du lien.

On voit qu'un tel dispositif antivol peut être réutilisé sans difficulté.

Dans la variante de réalisation montrée en figures 3 et 4, l'ergot 30 est solidaire d'un bouton 31 affleurant la surface 32 du boîtier moulé du bloc 16. Un ressort 33 exerce une force tendant à faire sortir l'ergot 30 des perforations 9 du lien 7. Le bouton 31 présente un méplat 34 coopérant avec une lame de blocage 35 mobile dans un plan perpendiculaire à l'axe de l'ergot 30. Cette lame mobile 35 est réalisée en un matériau élastique magnétique, par exemple en acier. Elle est fixée à l'une de ses extrémités sur un support 36 solidaire du boîtier moulé du bloc 16. Au repos, cette lame 35 vient en contact avec le bouton 31. Lorsque celui-ci est enfoncé, la lame maintient le bouton 31 et l'ergot 30 en position basse dans laquelle le lien est verrouillé, en venant s'intercaler entre le méplat 34 et la surface intérieure du bloc moulé 16.

En présence d'un outil de déverrouillage générant un champ magnétique, la lame mobile 35 est attirée dans une direction dans laquelle elle s'écarte du bouton 31, comme représenté en tirets sur la figure 4. Le méplat n'étant plus retenu, l'ensemble formé par l'ergot 30 et le bouton 31 est repoussé par le ressort 33 en position de libération du lien 7.

Dans la variante de réalisation montrée en figures 5 et 6, où les organes correspondant à ceux déjà décrits portent le même numéro de référence, la plaque 1 et le boîtier des moyens de verrouillage délimitent une seule fente 40, destinée à recevoir les deux parties terminales du lien 7. L'ergot 22 des moyens de verrouillage est encore solidaire d'une plaque 26 en matériau magnétique ou ferro-magnétique. Un ressort 23 repousse l'ergot en saillie. Le lien 7 est composite. Il comporte une lanière 42 en matière plastique relativement souple, dont l'une des parties terminales présente des crans 44 venus de moulage, destinés à venir en prise derrière l'ergot 22. Le lien comporte de plus un renfort 45 constitué par une pincette métallique en "U", dont la longueur est telle qu'il ne reste que peu ou pas de lanière nue hors de la fente 40 lorsque l'antivol est en place sur des lunettes, afin d'éviter qu'on ne puisse couper le lien là où il n'est pas renforcé. La pincette 45 peut être solidarisée de la lanière par surmoulage de cette dernière.

Une fois que le lien est en place, la rigidité de la pincette 45 interdit de retirer seule la partie terminale du lien qui est simplement engagé dans la fente 40 et qui n'est pas retenue par l'ergot 24.

La pincette métallique 45 ne peut pas endommager le pontet des lunettes, puisqu'elle en est séparée par la lanière 42 en matière plastique.

Le même résultat peut être atteint en utilisant, comme dans le cas illustré en figure 7, un lien constitué par une languette métallique 50 préformée en "U", pouvant être très mince, dans laquelle une crémaillère est formée par emboutissage, et par une fourrure 52 en matière plastique placée à l'intérieur de la boucle du lien 50.

La plaque sera généralement constituée en une matière plastique relativement rigide telle que le polyéthylène, alors que la lanière ou fourrure sera fréquemment en polypropylène ou en polyamide. La languette métallique en U aura généralement une épaisseur de quelques dixièmes de millimètre.

Comme le montre la figure 7, les moyens de verrouillage à désarmement magnétique peuvent être remplacés par d'autres types, et notamment par une vis 54 placée dans un trou taraudé du bloc de verrouillage, ayant une tête telle qu'elle ne peut être vissée et dévissée qu'à l'aide d'un outil spécial.

D'autres variantes encore de réalisation sont possibles et en particulier certaines des dispositions d'un des modes de réalisation précédemment décrits peuvent être reprises dans d'autres.

## Revendications

1. Dispositif antivol pour lunettes, comprenant un lien (7) souple prévu pour former une boucle enserrant le pontet (21) d'une monture de lunettes, contenant des moyens de renforcement (8, 46, 50) contre son sectionnement, et une plaque (1) munie de moyens d'accrochage à un support de présentation et portant des moyens, désarmables uniquement à l'aide d'un outil spécifique, de verrouillage d'une des extrémités du lien si l'autre est fixée de façon permanante à la plaque et des deux extrémités dans le cas contraire.

2. Dispositif selon la revendication 1, caractérisé en ce que le lien (7) est en matériau souple et contient un câble ou fil de renforcement.

3. Dispositif selon la revendication 1, caractérisé en ce que les dits moyens de verrouillage comportent un ergot (22) solidaire d'une pièce magnétisable, déplaçable entre une position de verrouillage dans laquelle l'ergot s'engage dans le lien et interdit son retrait, vers lequel il est repoussé par un ressort (23) et une position de déverrouillage dans laquelle il autorise le retrait du lien (7), vers laquelle il est amené lorsque ladite pièce est soumise à un champ magnétique généré par ledit outil spécifique.

4. Dispositif selon la revendication 1, caractérisé en ce que les dits moyens de verrouillage comportent un ergot (30) solidaire d'un bouton, déplaçable entre une position de verrouillage, vers laquelle il peut être amené par pression sur le bouton et dans laquelle il s'engage dans le lien et interdit son retrait, et une position de déverrouillage dans laquelle il autorise le retrait du lien, vers laquelle il est repoussé par l'action d'un ressort et comportent un moyen de blocage magnétisable déplaçable entre une position de verrouillage dans laquelle il maintient l'ergot en position engagée et une position de déverrouillage où il est amené lorsqu'il est soumis à l'action d'un champ magnétique.

5. Dispositif selon la revendication 1, caractérisé en ce que le lien est en forme de U et comprend un élément interne en matière plastique de contact avec le pontet et une pincette externe métallique (45,50) de renforcement et en ce que la plaque comporte une fente de réception des deux parties terminales du lien, dont l'une est munie de trous ou d'une crémaillère coopérant avec les dits moyens de verrouillage.

6. Dispositif selon la revendication 5, caractérisé en ce que ladite pincette (50) est de longueur supérieure à celle de l'élément interne et est munie des trous ou de la crémaillère.

7. Dispositif selon la revendication 5, caractérisé en ce que ledit élément interne (42) est plus long que la pincette (45) et est muni des trous ou de la crémaillère, la longueur de la pincette étant telle que la portion du dit élément interne qui reste à nu hors de la fente ait une longueur pratiquement nulle.

## Patentansprüche

1. Vorrichtung zur Diebstahlsicherung für Brillen mit einem biegsamen Band (7), das dazu vorgesehen ist, eine Schlaufe zu bilden, welche den Bügel eines Brillengestells umschlingt und Verstärkungsmittel (8, 46, 50) gegen seine Durchtrennung enthält, und einer Platte (1), die mit einer Einhängeeinrichtung an einem Anzeige- bzw. Displayträger versehen ist und eine Verriegelungseinrichtung trägt, die ausschließlich mit Hilfe eines speziellen Werkzeugs freigebbar ist, zur Verriegelung eines Endes des Bands, wenn das andere Ende dauerhaft an der Platte berestigt ist, und andernfalls der beiden Enden zugleich.

2. Vorrichtung nach Anspruch 1, dadurch gekennzeichnet, daß das Band (7) aus einem biegsamen Material besteht und ein Verstärkungskabel oder einen Verstärkungsdraht enthält.

3. Vorrichtung nach Anspruch 1, dadurch gekennzeichnet, daß die Verriegelungseinrichtung einen Vorsprung (22) aufweist, der mit einem magnetisierbierbaren Teil vereinigt und zwischen einer Verriegelungsstellung, in welche der Vorsprung in das Band eingreift und dessen Rückzug verhindert, in die er durch eine Feder (23) gedrängt ist, und einer Entriegelungsstellung verstellbar ist, in welcher er den Rückzug des Bands (7) erlaubt, in welche er mitgenommen ist, wenn das Teil einem magnetischen Feld ausgesetzt ist, das durch das spezielle Werkzeug erzeugt wird.

4. Vorrichtung nach Anspruch 1, dadurch gekennzeichnet, daß die Verriegelungseinrichtung einen Vorsprung (30) aufweist, der mit einer Taste vereinigt und zwischen einer Verriegelungsstellung, in welcher er durch Druck auf die Taste mitnehmbar ist, und in welcher er in das Band eingreift und dessen Rückzug verhindert, und einer Entriegelungsstellung verstellbar ist, in welcher er den Rückzug des Bands zuläßt, in welche er durch Einwirkung einer Feder gedrängt ist, und der eine magnetisierbare Blockiereinrichtung aufweist, die zwischen einer Verriegelungsstellung, in welcher sie den Vorsprung in Eingriffstellung hält und einer Entriegelungsstellung, in welche sie mitgenommen wird, bis sie der Einwirkung eines magnetischen Felds unterworfen ist, vorstellbar ist.

5. Vorrichtung nach Anspruch 1, dadurch gekennzeichnet, daß das Band U-Form aufweist und ein internes Element aus Kunststoffmaterial zum Kontakt mit dem Bügel und eine externe metallische Verstärkungspinzette (45, 50) aufweist, und daß die Platte einen Aufnahmeschlitz für zwei Endteile des Bandes aufweist, von denen eines mit Löchern oder einer Zahnstange versehen ist, die mit der Verriegelungseinrichtung zusammenwirken.

6. Vorrichtung nach Anspruch 5, dadurch gekennzeichnet, daß die Pinzette (50) eine größere Länge aufweist als das interne Element und mit den Löchern oder der Zahnstange versehen ist.

7. Vorrichtung nach Anspruch 5, dadurch gekennzeichnet, daß das interne Element (42) länger ist als die Pinzette (45) und mit den Löchern oder der Zahnstange versehen ist, wobei die Länge der Pinzette derart ist, daß derjenige Abschnitt des internen Elements, der außerhalb des Schlitzes verbleibt eine Länge von im wesentlichen Null aufweist.

## Claims

1. Anti-theft device for eye glasses, comprising a flexible link (7) arranged to form a closed loop over a bridge (21) of a mounting of eyeglasses, containing reinforcement means (8,46,50) against cutting, and a plate (1) having means for hanging on a display support and having means which are only releasable with a specific locking tool, for fastening one of the ends of the link if the otherend is permanently fixed to the plate and the two ends together in the contrary case.

2. Device according to claim 1, characterized in that the link (7) is of flexible material and contains a reinforcement cable or wire.

3. Device according to claim 1, characterized in that said fastening means comprise a pin (22) fast with a magnetizable part, movable between a locking position in which the pin engages the link and prevents removal of the link, toward which it is biased by a spring (23) and an unlocking position in which it permits removal of the link 7), towards which it is moved when said part is subjected to a magnetic field generated by said specific tool.

4. Device according to claim 1, characterized in that said fastening means comprise a pin (30) fast with a button, movable between a locking position, into which it can be moved by a pressure on the button and in which it engages the link and prevents removal thereof, and an unlocking position in which it permits removal of the link, toward which it is biased by a spring and said fastening means comprise a magnetizable locking means movable between a locking position in which it maintains the pin in engaged position and an unlocking position where it is brought when it is subjected to the action of a magnetic field.

5. Device according to claim 1, characterized in that the link is U-shaped and comprises an inner element of plastic material for contact with the bridge and outer metal clamp (45,50) for reinforcement and in that the plate comprises a slot for receiving the two end portions of the link, one of which is formed with holes or with a rack cooperating with said fastening means.

6. Device according to claim 5, characterized in that said clamp (50) is longer than the inner element and formed with the holes or with the rack.

7. Device according to claim 5, characterized in that said inner element (42) is longer than the clamp (45) and is formed with the holes or the rack, the length of the clamp being such that the portion of the inner element that remains uncovered out of the slot is substantially zero.
